(19) Europäisches Patentamt
European Patent Office
Office européen des brevets

(11) **EP 3 088 911 B1**

(12) **EUROPEAN PATENT SPECIFICATION**

(45) Date of publication and mention
of the grant of the patent:
**13.03.2019 Bulletin 2019/11**

(51) Int Cl.:
***G01S 5/00*** *(2006.01)*          ***G01S 5/06*** *(2006.01)*

(21) Application number: **15382189.7**

(22) Date of filing: **20.04.2015**

(54) **A METHOD OF COMMUNICATING AIRBORNE MULTILATERATION INFORMATION**

VERFAHREN ZUR KOMMUNIKATION VON MULTILATERATIONSINFORMATIONEN zwischen Luftfahrzeugen

PROCÉDÉ DE COMMUNICATION D'INFORMATIONS DE MULTILATÉRATION entre aéronefs

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
**02.11.2016 Bulletin 2016/44**

(73) Proprietor: **The Boeing Company**
**Chicago, IL 60606-1596 (US)**

(72) Inventors:
• **Rodriguez Montejano, Rosa Maria**
**28042 Madrid (ES)**
• **Taboso Ballesteros, Pedro**
**28042 Madrid (ES)**
• **Perez Villar, Victor**
**28042 Madrid (ES)**
• **Cano Serrano, Florencio**
**28042 Madrid (ES)**
• **Costas, David**
**28042 Madrid (ES)**
• **Garcia, Javier**
**28042 Madrid (ES)**

(74) Representative: **Carvajal y Urquijo, Isabel et al**
**Clarke, Modet & Co.**
**Suero de Quiñones, 34-36**
**28002 Madrid (ES)**

(56) References cited:
**US-A1- 2011 057 830**

• **KRISHNA SAMPIGETHAYA ET AL: "Assessment and mitigation of cyber exploits in future aircraft surveillance", AEROSPACE CONFERENCE, 2010 IEEE, IEEE, PISCATAWAY, NJ, USA, 6 March 2010 (2010-03-06), pages 1-10, XP031657271, ISBN: 978-1-4244-3887-7**
• **NEVEN W H L ET AL: "Wide Area Multilateration Report on EATMP TRS 131/04 Version 1.1", INTERNET CITATION, 1 January 2004 (2004-01-01), pages 1-94, XP007907348, Retrieved from the Internet: URL:http://www.eurocontrol.int/surveillanc e/gallery/content/public/documents/WAM_stu dy_report_1_1.pdf [retrieved on 2009-02-24]**
• **"Manual on the Secondary Surveillance Radar (SSR) Systems", , 14 July 2006 (2006-07-14), XP055218322, Retrieved from the Internet: URL:http://eaulib.eau.ac.th/Documents 2006_7/Doc 9684x - Manual on the Secondary Surveillance Radar (SSR) System Ed3 - 04_OCR.pdf [retrieved on 2015-10-05]**
• **"ADS-B for Dummies", , 5 December 2007 (2007-12-05), XP055217570, Retrieved from the Internet: URL:http://www.ssd.dhmi.gov.tr/getBinaryFi le.aspx?Type=3&dosyalD=195 [retrieved on 2015-10-01]**
• **"ADS-B Overview", , 24 September 2012 (2012-09-24), pages 1-24, XP055217578, Retrieved from the Internet: URL:http://www.avidyne.com/publications/gu ides/ADS-B-Overview.pdf [retrieved on 2015-10-01]**

## Description

FIELD OF THE INVENTION

The present disclosure provides a method of communicating airborne multilateration information (AMLAT), which can be deployed for increasing the safety use of the Automatic Dependent Surveillance-Broadcast (ADS-B) protocol. The ADS-B protocol is used in the surveillance of the air-traffic. Advantageously, the method of the present invention optimizes the use of the communication channel bandwidth. More advantageously, the method of the present invention can be used to allow the detection of ADS-B spoofing. The method of communicating airborne multilateration information can be implemented as a lightweight peer to peer communications protocol.

BACKGROUND OF THE INVENTION

There are several problems associated with the new generation of Communication, Navigation and Surveillance (CNS) systems. ADS-B is open, non encrypted and fake ADS-B signals are easy to create. Therefore, there is a need to provide a security measures to the ADS-B protocol.

Airborne multilateration concept has been proposed to serve as redundant system to confirm the position of aircraft. The present disclosure does not propose Airborne Multilateration as such. The Airborne Multilateration has already been discussed in the state of the art:

- Assessment and Mitigation of Cyber Exploits in Future Aircraft Surveillance. Krishna Sampigethaya, Radha Poovendran, and Linda Bushnell. IEEEAC paper #1342, Version 2, Updated November 1, 2009;
- *Method for validating aircraft traffic control data.* US patent application with publication number US20110057830A1;
- *Method and apparatus for ADS-B validation, active and passive multilateration and elliptical surveillance.* European patent EP1906204B1;
- *Systems and methods for providing spoof detection.* US patent application with publication number US20120041620A.

However, the above mentioned state of the art does not offer details on the communication protocol. A solution to spoofing like airborne multilateration needs of a detailed description of how the exchange of information between aircraft is done, which communication channel is used and how to avoid collapsing the 1090 MHz frequency in case 1090ES is the chosen communication channel. These detailed descriptions do not exist at the moment. That is the focus of the present disclosure: a detailed communication protocol, lightweight and peer to peer. It represents a step forward in a potential real implementation of airborne multilateration as anti-spoofing measure.

The Airborne Multilateration concept has already been discussed in the documents of the state of the art above mentioned. However, the existing proposals focus mostly on "group validation". Group Validation describes the basic concept of airborne multilateration: aircraft travelling in a common direction form a group network, led by a group leader. When an ADS-B signal from an aircraft P is received by three, four or more aircrafts, they can use time-difference-of-arrival technique to estimate the position of the aircraft P (see *Assessment and Mitigation of Cyber Exploits in Future Aircraft Surveillance*). In this technique all aircraft must share the information received from aircraft P.

These definitions of airborne multilateration leave several crucial issues without solution; for instance: no data link layer is selected nor capability studies are performed, group formation and internal verification rules are still to be defined or information exchanges protocols are to be developed from scratch.

The invention disclosed in US20110057830A1 proposes Data Link for the exchange of information between aircraft. The channel used in US20110057830A1 for ADS-B is the 1090ES frequency. The present invention also uses the 1090ES frequency, but it is not limited to it.

In the patent EP10906204B1, the receivers are both aircraft and ground stations and the system depends on a ground based server that distributes the information. By contrast, the present invention proposes an autonomous method that works airborne, independent of ground systems.

The patent US20120041620A describes airborne multilateration, but does not give details about the 'data cross link'. The present disclosure defines a communication channel and the communications protocol.

The present disclosure focus on the potential real implementation of airborne multilateration. For that, a communications protocol has to be defined. As already commented, some of the references about Airborne Multilateration propose Data Link as the vehicle for information exchange, however datalink is very costly and not advisable for broadcast communication. The aim of the present invention is to go deeper and concretize the communication protocol for a potential real implementation of the invention.

SUMMARY OF THE INVENTION

A first aspect of the present invention is to provide a method for communicating airborne multilateration information among aircraft provided with Automated Dependent Surveillance Broadcast (ADS-B) systems that periodically broadcast ADS-B messages containing ADS-B data. The ADS-B systems can also receive ADS-B messages. The ADS-B data comprises at least an Aircraft Identification (Aircraft ID) and the GNSS (Global Navigation Satellite System) position of the aircraft. The broadcasting range for the ADS-B messages is a predetermined range since it depends on the ADS-B radio technology. The method for communicating airborne multilateration information among aircraft comprises:

i) defining at least one group, each group being defined as all aircraft within ADS-B range of a particular aircraft;

ii) processing, by each aircraft in the group, multilateration data of all aircraft in the group; the multilateration data being the ADS-B data combined with a timestamp for a determined time window;

iii) determining, by each aircraft in the group, if there are at least four timestamps per each Aircraft ID for the determined time window, for applying multilateration calculations in order to verify each aircraft in the group; if yes, continuing at step i) for a next time window; if no, continuing at the next step;

iv) issuing a broadcast request to each aircraft in the group if there is no request received from other aircraft in the group during a random request delay;

v) sequentially broadcasting the aircraft ID and the timestamp for each ADS-B message received during the determined time window ($TW_n$) and for each aircraft in the group by each aircraft in the group;

vi) receiving, by each aircraft in the group, the aircraft ID and the timestamp for the determined time window ($TW_n$) from all aircraft in a group.

In one or more embodiments, the processing step (step ii)) may comprise the following sub-steps:

- listening during determined time windows to the ADS-B messages from aircraft under the ADS-B range;
- extracting ADS-B data (Aircraft ID and position) from the ADS-B message and adding the timestamp (time at which the ADS-B message is received, i.e., Time Of Arrival - TOA) to each ADS-B data thus forming the multilateration data; and,
- storing multilateration data (the Aircraft ID, the position and the timestamp) for each time window in a database by each aircraft in the group. In order to do so, a timestamp is added to each extracted ADS-B data.

In one or more embodiments, the method is configured to be disabled in areas with a high density of nodes.

A second aspect of the present invention is to provide a method for verifying airborne multilateration information among aircraft. The second aspect of the invention adds a further step to the method of the first aspect of the invention. The step is verifying ADS-B data of each aircraft by applying the multilateration calculations to multilateration data for each aircraft. The method of the second aspect of the present invention can be used as anti-spoofing measure.

In one or more embodiments, the verifying step according to the second aspect may comprise that an aircraft is considered truthful when the position contained in the ADS-B messages matches the position calculated by multilateration calculations; and, an aircraft is considered malicious when there is not a match between both positions, the one obtained via ADS-B and the one calculated by multilateration calculations. An example of multilateration calculations is explained at the "detailed description" section.

In a third aspect of the present invention, a use of the method according to any of the above mentioned embodiments is provided for enabling ADS-B systems to be communicated among them with airborne multilateration information.

In a fourth aspect of the present invention, a use of the method according to any of the above mentioned embodiments is provided as a peer to peer communications protocol.

In a fifth aspect of the present invention, a use of the method according to the second aspect of the invention is provided as a peer to peer communications protocol to enable the detection of ADS-B spoofing by means of airborne multilateration.

In a sixth aspect of the present invention, a computer readable medium having stored therein a computer program that when loaded onto ADS-B systems, configures the ADS-B systems to enable communication with airborne multilateration information among said ADS-B systems according to the method described in the first aspect of the invention.

In a seventh aspect of the present invention, a computer readable medium having stored therein a computer program that when loaded onto ADS-B systems, configures the ADS-B systems to enable communication with airborne multilateration information among said ADS-B systems according to the method described in the first aspect of the invention and verifying the position of an aircraft according to the second aspect of the invention.

BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will be best understood by reference to the following detailed description of an illustrative embodiment of the present disclosure when read in conjunction with the accompanying drawings, wherein:

Figure 1 includes a flowchart of the method for communicating airborne multilateration information among aircraft according to the present invention for enabling the detection of ADS-B spoofing.

Figure 2 illustrates an exemplary multilateration calculation according to the state of art.

Figures 3A, 3B and 3C illustrate exemplary definitions of group for three particular Aircraft named as 1, 2 and 5, respectively.

Figure 4A illustrates exemplary definition of group for one particular Aircraft 1.

Figure 4B is an illustration of the ADS-B messages received at Aircraft 1 at the upper time-axis. It also illustrates a time window and a time window period at the intermediate time-axis and the ADS-B messages captured at time windows $TW_n$ and $TW_{n+1}$ by Aircraft 1 at the bottom time-axis.

Figure 4C is an illustration of the ADS-B messages captured at time window $TW_n$ by Aircraft 1.

Figure 5 illustrates the ADS-B messages captured at time window $TW_n$ by Aircraft 1 and a table having Aircraft ID, ADS-B position and TimeStamp.

Figure 6 illustrates an exemplary table for Aircraft 1 having three Time Windows $TW_n$, $TW_{n+1}$ and $TW_{n+2}$, each time window having Aircraft ID, ADS-B position, TimeStamp and "verified" status fields.

Figure 7 illustrates an exemplary table for Aircraft 1 having one Time Windows $TW_n$. Whether the application of multilateration calculation depends on the number of timestamps.

Figure 8 illustrates an exemplary random request delay the Aircraft 1 is waiting for issuing a request.

Figure 9 illustrates an exemplary broadcasting of requests from one aircraft to all aircraft under its range.

Figure 10 illustrates an exemplary coordination process for listening ADS-B messages (upper), issuing a request for further information (intermediate) and broadcasting multilateration data requested (bottom).

Figure 11 illustrates an exemplary broadcasting of responses from one aircraft to all aircraft under its range.

Figure 12 illustrates an exemplary coordination process in each time slot for broadcasting multilateration data.

Figure 13 illustrates an exemplary table for Aircraft 1 in which three aircraft of the group are verified and another aircraft is not verified due to a lack of multilateration data.

DETAILED DESCRIPTION

While the exemplary embodiments illustrated in the figures and described herein are presently preferred, it should be understood that these embodiments are offered by way of example only. Accordingly, the present invention is not limited to a particular embodiment, but extends to various modifications that nevertheless fall within the scope of the appended claims. The order or sequence of any processes or method steps may be varied or re-sequenced according to alternative embodiments.

The present exemplary embodiment provides a novel method for communicating airborne multilateration information among aircraft provided with ADS-B systems with the objective of finding out spoofed aircraft. Thus, the present exemplary embodiment combines the first and the second aspect of the invention.

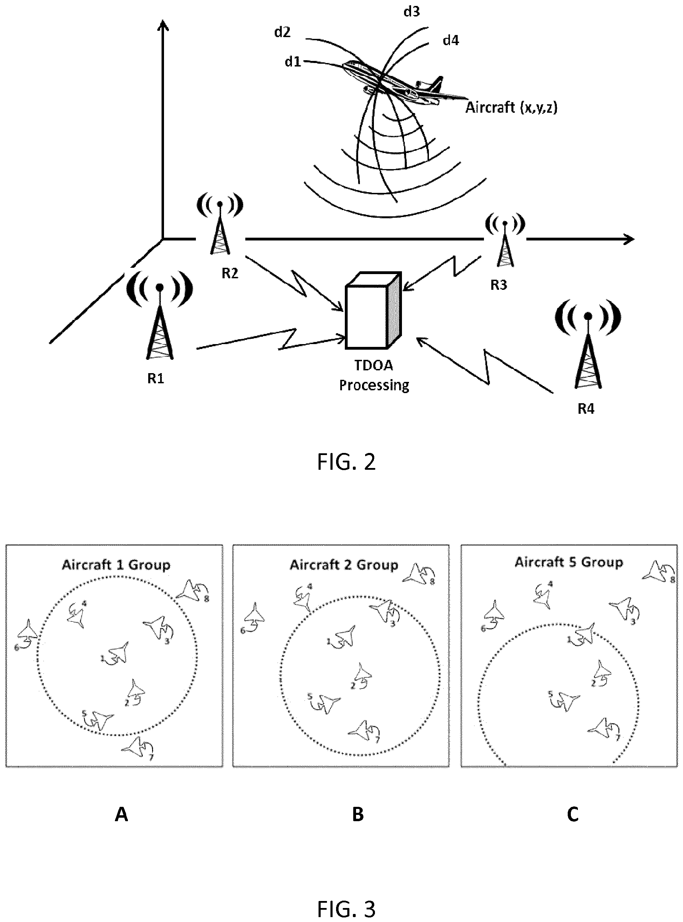

Multilateration (MLAT) can be defined as a cooperative surveillance application that accurately establishes the position of transmitters. MLAT uses data from an aircraft that can be transmitted in response to different technologies such as Mode S or ADS-B. The transmitted signal by the aircraft will be received by each of the ground stations at fractionally different times (see figure 2). Using advanced computer processing techniques, these individual time differences allow an aircraft's position to be accurately calculated.

The basic idea in multilateration is to have at least "n" equations to estimate "n" variables. Considering an emitter (Aircraft in Figure 2) at an unknown location vector ($x,y,z$) and that the source is within range of N receivers at known locations (R1, R2 ..., RN), the distance (d) from the emitter to one of the receivers is:

$$d_i = \sqrt{(x_i - x)^2 + (y_i - y)^2 + (z_i - z)^2}$$

The TDOA equation for receivers $i$ and $m$ is:

$$TDOA_{i-m} = TOA_i - TOA_m$$

Considering the light speed (c), there is a direct relation between previous equations:

$$c \cdot TDOA_{i-m} = d_i - d_m$$

being:

- TDOA the Time-Difference of Arrival.
- $x_i$, $y_i$ and $z_z$ is the position of each receiver (aircraft as receiver stations);
- $x$, $y$ and $z$ is the position of the emitt aircraft.

Thus, in order to accurately establish the position of the emitter, at least four receivers are needed.

The above is considered for the present invention as multilateration calculations.

Automated Dependent Surveillance Broadcast (ADS-B) is a surveillance technology used to monitor air traffic with high precision. ADS-B combines a positioning capability, aircraft avionics, and ground infrastructure. The ADS-B system has two subsystems, ADS-B Out and ADS-B In. ADS-B Out periodically broadcasts information about each aircraft (ID, position,...). ADS-B IN means the equipped aircraft ability to receive and display another aircraft's ADS-B OUT and other services such as ADS-R (Automated Dependent Surveillance Rebroadcast), TIS-B (Traffic Information Service Broadcast), and FIS-B (Flight Information Service Broadcast).

For the correct performance of the present invention and to minimize the error sources and maximize the precision it is key to count with a common time reference. The present invention has a universal time reference based on GNSS. GNSS time is available worldwide and it is a reference that provides accuracy enough to perform multilateration calculation.

The first aspect of the invention is to define a communication protocol to enable the information interchange between aircraft. The present disclosure defines a method for communicating airborne multilateration information among aircraft as a communication protocol.

Since the method of the present invention uses ADS-B systems provided within the aircraft equipment, the step zero of the method is that each aircraft is provided with an ADS-B system that periodically broadcasts and receives ADS-B messages with the ADS-B data (at least aircraft ID and position).

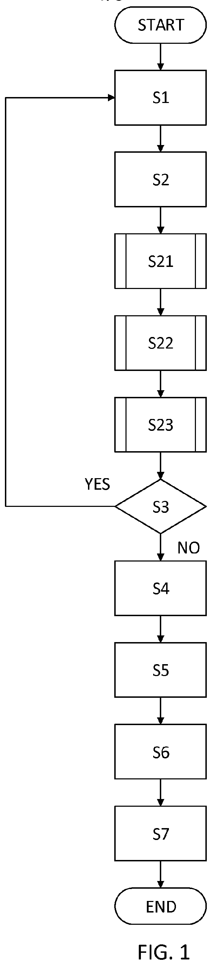

The method of the present invention comprises a first step (see figure 1 - S1) of defining at least one group, each group being defined as all aircraft (nodes) within ADS-B range of a particular aircraft (node). For example, the ADS-B range based on 1090-ES can provide a communication range of about 120 nautical miles (about 222,24 km). Figure 3 is bi-dimensional representation of the position of eight aircraft named from 1 to 8. Figure 3A shows the group for Aircraft 1 being formed by those under the range (depicted with dotted line) of the aircraft 1, i.e., aircraft 2, 3, 4 and 5. Figure 3B shows the group for Aircraft 2 being formed by those under the range (depicted with dotted line) of the aircraft 2, i.e., aircraft 1, 3, 5 and 7. Figure 3C shows the group for Aircraft 5 being formed by those under the range (depicted with dotted line) of the aircraft 5, i.e., aircraft 1, 2 and 7.

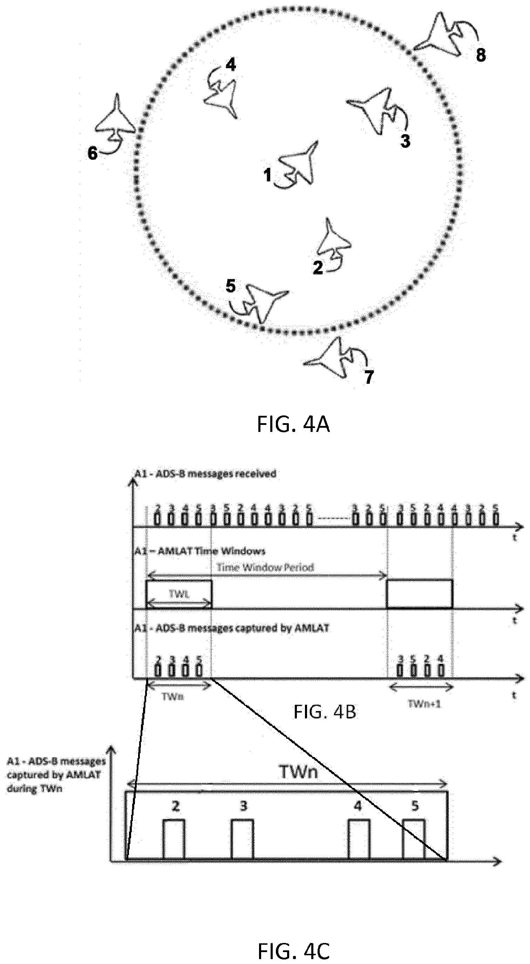

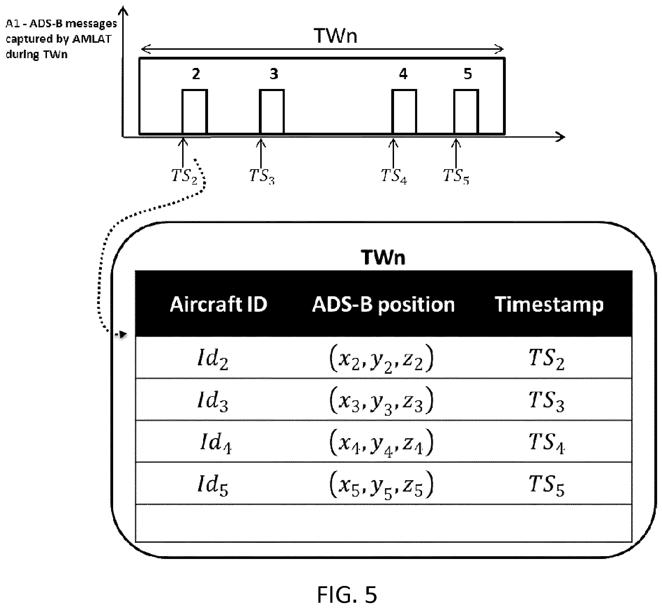

The second step (see figure 1 - S2) of the method is that each aircraft in the group is processing the multilateration data received from those aircraft under the ADS-B range. The processing step further comprises several sub-steps. The first sub-step (see figure 1 - S21) is that each aircraft in the group is listening during determined time windows to the ADS-B messages from aircraft under the ADS-B range. The time windows (TW) are long enough to capture at least one ADS-B position message from each of the surrounding aircraft. They are also designed to be as short as possible to avoid the saturation of the system. For example, the time windows are 500 ms (milliseconds) long and are repeated periodically every 10 seconds (time window period) starting on the first seconds of each minute. Figure 4A shows aircraft 2 to 5 which are under the ADS-B range of aircraft 1. So, aircraft 1 (A1) is receiving ADS-B messages from aircraft 2 to 5 (see top-axis of figure 4B). A1 is listening during 500 ms (TWL) (see intermediate taxis of figure 4B) every 10 seconds. The second sub-step (see figure 1 - S22) is that each aircraft in the group is extracting ADS-B data (Aircraft ID and position) from the ADS-B message and adding the timestamp (time at which the ADS-B message is received, i.e., Time Of Arrival - TOA) to each ADS-B data thus forming the multilateration data. Figure 4B shows that A1 captures ADS-B messages from aircraft 2 to 5 during $TW_n$ (see bottom-axis of figure 4B and figure 4C). The third sub-step (see figure 1 - S23) is storing multilateration data (the Aircraft ID, the position and the timestamp) for each time window in a database (Table) by each aircraft in the group. In order to do so, a timestamp is added to each extracted ADS-B data. For instance, according to figure 5, the database of aircraft 1 contains the time window $TW_n$ with the aircraft ID of four aircraft (2 to 5), their positions and the timestamp of them, the aircraft ID and the positions being contained in the ADS-B messages received at aircraft 1. The database can be allocated into the system memory during a determined period of time. After this period of time the information is considered obsolete and it is deleted or overwritten.

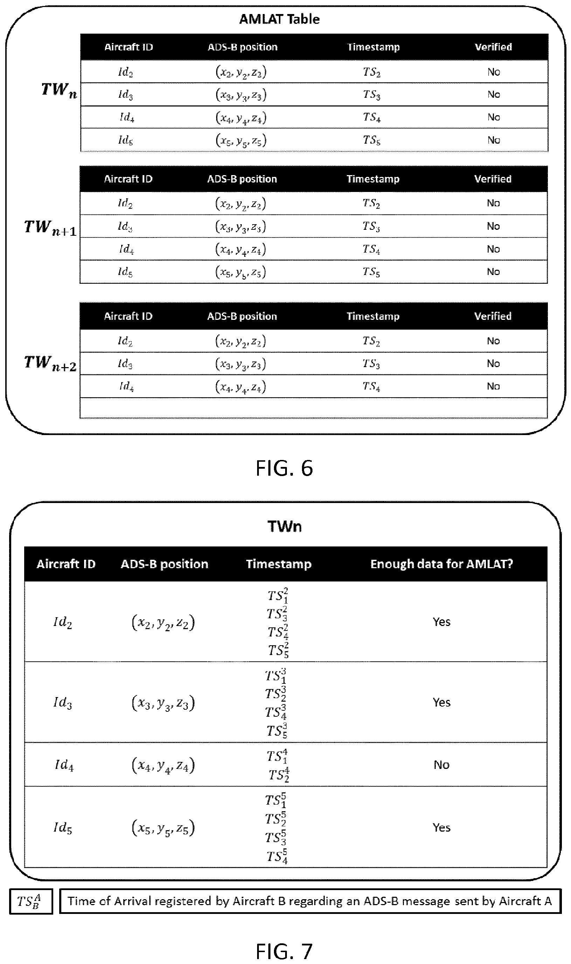

Since the group changes dynamically with time, the multilateration data comprised in each time window (TW) for the same aircraft also changes with time. Figure 6 shows a table (database) of aircraft 1 with three time windows ($TW_n$, $TW_{n+1}$, $TW_{n+2}$) having four, four and three multilateration data, respectively.

The third step (see figure 1 - S3) of the method is that each aircraft in the group is determining if there is enough information (at least four timestamps per each Aircraft ID and time window) for applying multilateration calculations in order to verify each aircraft in the group. If there is enough information for verifying an aircraft, the method continues at the first step for the next time window; if not, the method continues at the fourth step. The method only determines whether there is enough information for a system implementing the method to calculate multilateration calculations. Figure 7 shows an example of the implementation of the table for Aircraft 1 having four rows for aircraft 2 to 5 in which there is needed for data for verifying the aircraft 4. Figure 6 also shows that there is only one timestamp per each Aircraft ID for each time window. Therefore, the "verified" column of the table is recorded as "no" (verified). Consequently, further information is needed to verify if aircraft under the ADS-B range.

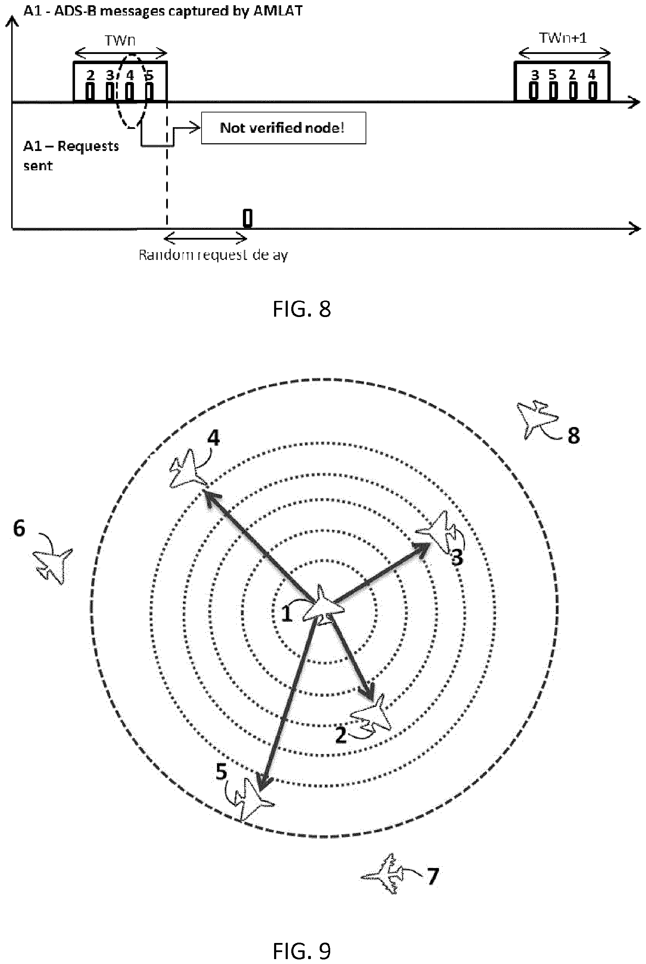

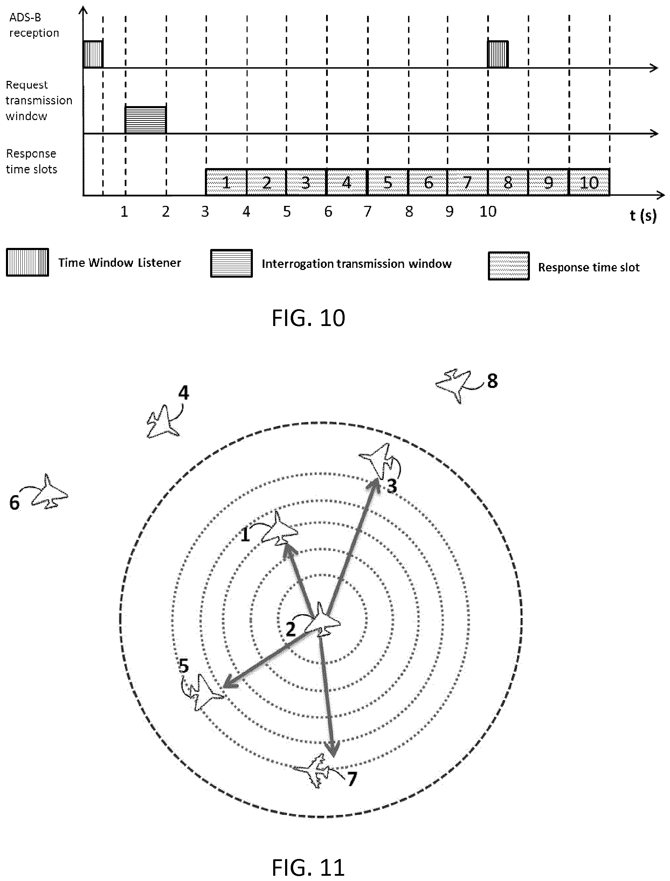

The fourth step (see figure 1 - S4; Figure 9) of the method is issuing a broadcast request to each aircraft within the ADS-B range if there is no request received from other aircraft during the random request delay. In order to perform multilateration calculations, the implementation of the method needs to know the registered timestamp or Time of Arrival (TOA), of a concrete ADS-B message to the rest of the nodes (aircraft) in the group (of three of them at least). Since the request is not addressed, it is broadcasted to all the nodes (aircraft) in the group that receive and process the request. Requests do not require data regarding a specific aircraft. A request is a trigger for the rest of the aircraft within the group to send a part of their table for a concrete time window. The request is received by all of the nodes (aircraft) in the group. For example, the request can be sent via the Mode S transponder data link, using the 1030MHz frequency. Figure 8 shows an example of implementation of the fourth step. Aircraft 1 checked that aircraft 4 was not verified. Therefore, aircraft 1 sends a request after a random request delay to the aircraft under its range (Figure 9). In order to avoid message collisions for the issuance of the requests, the method provides that each aircraft in a group establishing an individual random request delay. For the example depicted in figure 10, the random request delay is not longer than 1 second.

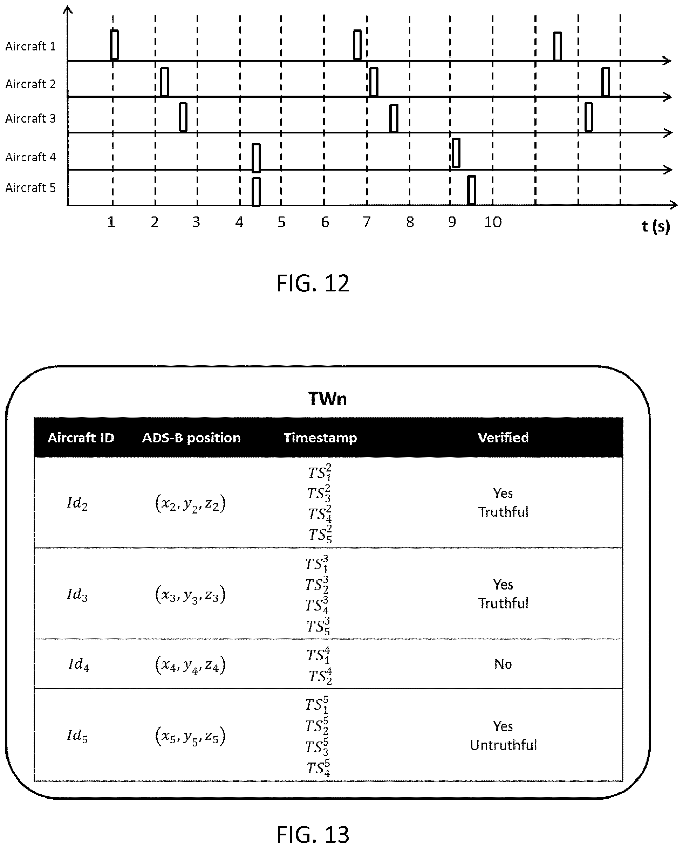

The fifth step (see figure 1 - S5; Figure 11) is broadcasting the aircraft ID and the timestamp for each ADS-B position message received during the determined time window ($TW_n$) and for each aircraft in the group by each aircraft in the group. This means that each aircraft broadcast some specific data of its table. These data are broadcasted by emitting a series of replies. Each reply message contains information about a single ADS-B message received during the time window requested. The information on each reply includes the aircraft ID that sent the ADS-B message, the time window ID ($TW_n$), and the timestamp. A reply message contains the above mentioned data contained in a single row of the table. Therefore, there are needed as many reply messages as aircraft in the group to transmit the entire table. Following the above mentioned example, the AMLAT replies can be emitted via the Mode S transponder data link (1090 MHz). Once again, in order to avoid message collisions for the issuance of the replies, the method provides that each aircraft in a group establishing a self-assignment response time slot and an individual random interval response delay. Figure 10 shows an example of implementation of the self-assignment response time slot. Three time-axes are depicted in figure 10, the upper one represents a time window of 500ms for an aircraft to listen the ADS-B messages. The intermediate time-axis represents the time window for the issuance of requests. The time widow is 1 second long and goes from second one to second two of the time-axis. The lower time-axis represents the response time slot. At the third second, all aircraft start to respond with messages that contains only one row of its own table, thus all aircraft broadcast its first row between the third and the fourth second, its second row of the table between the fourth and the fifth, and so on. Once the issuance of the replies for each aircraft is coordinated with the allocation of the slots, a coordination of the replies within each slot is needed. For that purpose, the method provides the individual random interval response delay. Figure 12 shows an example of implementation of "individual random interval response delay".

The sixth step (see figure 1 - S6) is receiving the multilateration data, i.e., the aircraft ID and the timestamp, for the determined time window ($TW_n$) from all aircraft in a group. The multilateration data can be stored in the table (see figure 7).

As stated above, the present exemplary embodiment combines the first and the second aspect of the invention. The second aspect of the invention is applying the method of the first aspect to enable the detection of ADS-B spoofing. In order to do so, the seventh step (see figure 1 - S7) is added. The seventh step is verifying ADS-B data of each aircraft by applying the multilateration calculations to multilateration data for each aircraft. An aircraft (node) is considered truthful when the position contained in the ADS-B messages matches the position calculated by multilateration calculations. An aircraft (node) is considered malicious when there is not a match between both positions, the one obtained via ADS-B and the one calculated by multilateration calculations. Figure 13 shows an example of implementation of the table for aircraft 1, having verified aircraft 2 and 3 as truthful aircraft, also having verified aircraft 5 as untruthful.

**Claims**

1. A method for communicating airborne multilateration information among aircraft provided with ADS-B systems that periodically broadcast ADS-B messages containing ADS-B data, said ADS-B data comprising at least an Aircraft ID and a GNSS position, the method comprising:

    i) defining (S1) a group, the group being defined as all aircraft within ADS-B range of a particular aircraft (A1);
    ii) processing (S2), by each aircraft in the group, multilateration data received from aircraft under the ADS-B range; the multilateration data being the ADS-B data combined with a timestamp for a determined time window ($TW_n$);

    **characterized in that** the method further comprises:

    iii) determining (S3), by each aircraft in the group, if there are at least four timestamps per each Aircraft ID of the group for the determined time window ($TW_n$), for applying multilateration calculations in order to verify each aircraft in the group; if yes, continuing at the step i) for a next time window; if no, continuing at the next step;
    iv) each aircraft in the group establishing an individual random request delay and issuing a broadcast request (S4) to each aircraft in the group if there is no broadcast request received from other aircraft in the group during the random request delay;
    v) upon reception of the broadcast request, each aircraft in the group establishing an individual random interval response delay and sequentially broadcasting (S5) the aircraft ID and the timestamp for each ADS-B message received during the determined time window ($TW_n$) and for each aircraft in the group by each aircraft in the group; and,

vi) receiving (S6), by each aircraft in the group, the aircraft ID and the timestamp for the determined time window ($TW_n$) from all aircraft in the group.

2. A method according to claim 1, wherein the processing (S2) of multilateration data further comprises the following sub-steps:

• listening (S21) during determined time windows to the ADS-B messages from aircraft under the ADS-B range;
• extracting (S22) ADS-B data from the ADS-B message and adding the timestamp to each ADS-B data thus forming the multilateration data; and,
• storing (S23) multilateration data for each time window in a database by each aircraft in the group.

3. A method according to claim 1 or 2, further comprising verifying (S7) ADS-B data of each aircraft by applying multilateration calculations to the multilateration data for each aircraft.

4. Use of the method according to any of claims 1 to 2 for enabling ADS-B systems to be communicated among the ADS-B systems for verifying airborne multilateration information.

5. Use of the method according to any of claims 1 to 2 as a peer to peer communications protocol.

6. Use of the method according to any of claims 1 to 2 as a peer to peer communications protocol to enable the detection of ADS-B spoofing by means of airborne multilateration.

7. A computer readable medium having stored therein a computer program that when loaded onto ADS-B systems, configures the ADS-B systems to enable communication among said ADS-B systems according to the method described in any of claims 1 to 2 for verifying airborne multilateration information.

**Patentansprüche**

1. Verfahren zum Übermitteln von luftgestützten Multilaterationsinformationen zwischen Flugzeugen, die mit ADS-B-Systemen ausgestattet sind, die periodisch ADS-B-Meldungen senden, die ADS-B-Daten enthalten, wobei die ADS-B-Daten mindestens eine Flugzeug-ID und eine GNSS-Position umfassen, wobei das Verfahren Folgendes umfasst:

i) Definieren (S1) einer Gruppe, wobei die Gruppe als alle Flugzeuge innerhalb des ADS-B-Bereichs eines bestimmten Flugzeugs (A1) definiert ist;

ii) Verarbeiten (S2), durch jedes Flugzeug in der Gruppe, von Multilaterationsdaten, die von Flugzeugen unter dem ADS-B-Bereich empfangen werden; wobei die Multilaterationsdaten die ADS-B-Daten in Kombination mit einem Zeitstempel für ein bestimmtes Zeitfenster ($TW_n$) sind;

**dadurch gekennzeichnet, dass** das Verfahren ferner Folgendes umfasst:

iii) Bestimmen (S3), von jedem Flugzeug in der Gruppe, ob es mindestens vier Zeitstempel pro Flugzeug-ID der Gruppe für das bestimmte Zeitfenster ($TW_n$) gibt, um Multilaterationsberechnungen anzuwenden, um jedes Flugzeug in der Gruppe zu überprüfen; wenn ja, Fortfahren mit Schritt i) für ein nächstes Zeitfenster; wenn nein, Fortfahren mit dem nächsten Schritt;

iv) jedes Flugzeug in der Gruppe legt eine individuelle Zufallsanfrageverzögerung fest und sendet eine Sendeanfrage (S4) an jedes Flugzeug in der Gruppe aus, wenn während der Zufallsanfrageverzögerung keine Sendeanfrage von anderen Flugzeugen in der Gruppe empfangen wird;

v) nach Empfang der Sendeanfrage legt jedes Flugzeug in der Gruppe eine individuelle Zufallsintervall-Antwortverzögerung fest und sendet sequentiell (S5) die Flugzeug-ID und den Zeitstempel für jede ADS-B-Meldung, die während des bestimmten Zeitfensters ($TW_n$) empfangen wurde, und für jedes Flugzeug in der Gruppe durch jedes Flugzeug in der Gruppe; und,

vi) Empfangen (S6) der Flugzeug-ID und des Zeitstempels für das bestimmte Zeitfenster ($TW_n$) von allen Flugzeugen der Gruppe durch jedes Flugzeug der Gruppe.

2. Verfahren nach Anspruch 1, wobei die Verarbeitung (S2) von Multilaterationsdaten weiterhin folgende Teilschritte umfasst:

• Hören (S21) während bestimmter Zeitfenster auf die ADS-B-Meldungen von Flugzeugen unter dem ADS-B-Bereich;
• Extrahieren (S22) von ADS-B-Daten aus der ADS-B-Meldung und Hinzufügen des Zeitstempels zu den jeweiligen ADS-B-Daten, wodurch die Multilaterationsdaten gebildet werden; und,
• Speichern (S23) von Multilaterationsdaten für jedes Zeitfenster in einer Datenbank durch jedes Flugzeug in der Gruppe.

**3.** Verfahren nach Anspruch 1 oder 2, ferner umfassend das Überprüfen (S7) von ADS-B-Daten jedes Flugzeugs durch Anwenden von Multilaterationsberechnungen auf die Multilaterationsdaten für jedes Flugzeug.

**4.** Verwendung des Verfahrens nach einem der Ansprüche 1 bis 2, um die Kommunikation von ADS-B-Systemen zwischen den ADS-B-Systemen zur Überprüfung von luftgestützten Multilaterationsinformationen zu ermöglichen.

**5.** Verwendung des Verfahrens nach einem der Ansprüche 1 bis 2 als Peerto-Peer-Kommunikationsprotokoll.

**6.** Verwendung des Verfahrens nach einem der Ansprüche 1 bis 2 als Peerto-Peer-Kommunikationsprotokoll, um die Erkennung von ADS-B-Verfälschung durch luftgestützte Multilateration zu ermöglichen.

**7.** Computerlesbares Medium, in dem ein Computerprogramm gespeichert ist, das, wenn es auf ADS-B-Systeme geladen wird, die ADS-B-Systeme ausbildet, um die Kommunikation zwischen den ADS-B-Systemen gemäß dem in einem der Ansprüche 1 bis 2 beschriebenen Verfahren zur Überprüfung von luftgestützten Multilaterationsinformationen zu ermöglichen.

## Revendications

**1.** Procédé de communication d'informations de multilatération aérienne entre aéronefs pourvus de systèmes ADS-B qui diffusent périodiquement des messages ADS-B contenant des données ADS-B, lesdites données ADS-B comprenant au moins un ID d'Aéronef et une position GNSS, le procédé comprenant :

   i) la définition (S1) un groupe, le groupe étant défini comme tous les aéronefs dans une zone ADS-D d'un aéronef particulier (A1) ;
   ii) le traitement (S2), par chaque aéronef dans le groupe, de données de multilatération reçues d'un aéronef dans la zone ADS-B ; les données de multilatération étant les données ADS-B combinées avec un horodatage pour une fenêtre temporelle déterminée ($TW_n$) ;

   **caractérisé en ce que** le procédé comprend en outre :

   iii) la détermination (S3), par chaque aéronef dans le groupe, de la présence d'au moins quatre horodatages pour chaque ID d'Aéronef du groupe pour la fenêtre temporelle déterminée ($TW_n$), pour l'application de calculs de multilatération afin de vérifier chaque aéronef dans le groupe ; si oui, continuer à l'étape i) pour une prochaine fenêtre temporelle ; si non, continuer à la prochaine étape ;
   iv) l'établissement par chaque aéronef dans le groupe d'un délai de requête aléatoire individuelle et l'émission d'une requête de diffusion (S4) à chaque aéronef dans le groupe s'il n'y pas de requête de diffusion reçue d'un autre aéronef dans le groupe pendant le délai de requête aléatoire ;
   v) après la réception de la requête de diffusion, l'établissement par chaque aéronef dans le groupe d'un délai de réponse intervalle aléatoire individuelle et ultérieurement la diffusion (S5) de l'ID d'aéronef et de l'horodatage pour chaque message ADS-B reçu pendant la fenêtre temporelle déterminée ($TW_n$) et pour chaque aéronef dans le groupe par chaque aéronef dans le groupe ; et,
   vi) la réception (S6), par chaque aéronef dans le groupe, de l'ID d'aéronef et de l'horodatage pour la fenêtre temporelle déterminée ($TW_n$) de tous les aéronefs dans le groupe.

**2.** Procédé selon la revendication 1, dans lequel le traitement (S2) de données de multilatération comprend en outre les sous-étapes suivantes :

   • l'écoute (S21) pendant les fenêtres temporelles déterminées des messages ADS-B d'aéronef dans la zone ADS-B ;
   • l'extraction (S22) de données ADS-B du message ADS-B et l'ajout de l'horodatage à chaque donnée ADS-B formant ainsi les données de multilatération ; et,
   • le stockage (S23) de données de multilatération pour chaque fenêtre temporelle dans une base de données par chaque aéronef dans le groupe.

**3.** Procédé selon la revendication 1 ou 2, comprenant en outre la vérification (S7) de données ADS-B de chaque aéronef en appliquant des calculs de multilatération aux données de multilatération pour chaque aéronef.

**4.** Utilisation du procédé selon l'une quelconque des revendications 1 à 2 pour permettre aux systèmes ADS-B d'être communiqués entre les systèmes ADS-B pour la vérification d'informations de multilatération aérienne.

**5.** Utilisation du procédé selon l'une quelconque des revendications 1 à 2 comme un protocole de communications pair à pair.

**6.** Utilisation du procédé selon l'une quelconque des revendications 1 à 2 comme un protocole de communications paire à paire pour permettre la détection d'usurpation d'ADS-B au moyen de la multilatération aérienne.

**7.** Moyen lisible par ordinateur ayant stocké à l'intérieur un programme informatique qui lorsqu'il est chargé sur des systèmes ADS-B, configure les systèmes ADS-B pour permettre la communication entre lesdits systèmes ADS-B selon le procédé décrit dans l'une quelconque des revendications 1 à 2 pour vérifier les informations de multilatération aérienne.

FIG. 1

FIG. 2

| A | B | C |

FIG. 3

FIG. 4A

FIG. 4B

FIG. 4C

A1 - ADS-B messages
captured by AMLAT
during TWn

TWn

2  3  4  5

$TS_2$  $TS_3$  $TS_4$  $TS_5$

**TWn**

| Aircraft ID | ADS-B position | Timestamp |
|:-----------:|:--------------:|:---------:|
| $Id_2$ | $(x_2, y_2, z_2)$ | $TS_2$ |
| $Id_3$ | $(x_3, y_3, z_3)$ | $TS_3$ |
| $Id_4$ | $(x_4, y_4, z_4)$ | $TS_4$ |
| $Id_5$ | $(x_5, y_5, z_5)$ | $TS_5$ |
|  |  |  |

FIG. 5

## AMLAT Table

$TW_n$

| Aircraft ID | ADS-B position | Timestamp | Verified |
|---|---|---|---|
| $Id_2$ | $(x_2, y_2, z_2)$ | $TS_2$ | No |
| $Id_3$ | $(x_3, y_3, z_3)$ | $TS_3$ | No |
| $Id_4$ | $(x_4, y_4, z_4)$ | $TS_4$ | No |
| $Id_5$ | $(x_5, y_5, z_5)$ | $TS_5$ | No |

$TW_{n+1}$

| Aircraft ID | ADS-B position | Timestamp | Verified |
|---|---|---|---|
| $Id_2$ | $(x_2, y_2, z_2)$ | $TS_2$ | No |
| $Id_3$ | $(x_3, y_3, z_3)$ | $TS_3$ | No |
| $Id_4$ | $(x_4, y_4, z_4)$ | $TS_4$ | No |
| $Id_5$ | $(x_5, y_5, z_5)$ | $TS_5$ | No |

$TW_{n+2}$

| Aircraft ID | ADS-B position | Timestamp | Verified |
|---|---|---|---|
| $Id_2$ | $(x_2, y_2, z_2)$ | $TS_2$ | No |
| $Id_3$ | $(x_3, y_3, z_3)$ | $TS_3$ | No |
| $Id_4$ | $(x_4, y_4, z_4)$ | $TS_4$ | No |

## FIG. 6

## TWn

| Aircraft ID | ADS-B position | Timestamp | Enough data for AMLAT? |
|---|---|---|---|
| $Id_2$ | $(x_2, y_2, z_2)$ | $TS_1^2$ $TS_3^2$ $TS_4^2$ $TS_5^2$ | Yes |
| $Id_3$ | $(x_3, y_3, z_3)$ | $TS_1^3$ $TS_2^3$ $TS_4^3$ $TS_5^3$ | Yes |
| $Id_4$ | $(x_4, y_4, z_4)$ | $TS_1^4$ $TS_2^4$ | No |
| $Id_5$ | $(x_5, y_5, z_5)$ | $TS_1^5$ $TS_2^5$ $TS_3^5$ $TS_4^5$ | Yes |

| $TS_B^A$ | Time of Arrival registered by Aircraft B regarding an ADS-B message sent by Aircraft A |
|---|---|

## FIG. 7

A1 - ADS-B messages captured by AMLAT

FIG. 8

FIG. 9

FIG. 10

FIG. 11

FIG. 12

## TWn

| Aircraft ID | ADS-B position | Timestamp | Verified |
|---|---|---|---|
| $Id_2$ | $(x_2, y_2, z_2)$ | $TS_1^2$ <br> $TS_3^2$ <br> $TS_4^2$ <br> $TS_5^2$ | Yes <br> Truthful |
| $Id_3$ | $(x_3, y_3, z_3)$ | $TS_1^3$ <br> $TS_2^3$ <br> $TS_4^3$ <br> $TS_5^3$ | Yes <br> Truthful |
| $Id_4$ | $(x_4, y_4, z_4)$ | $TS_1^4$ <br> $TS_2^4$ | No |
| $Id_5$ | $(x_5, y_5, z_5)$ | $TS_1^5$ <br> $TS_2^5$ <br> $TS_3^5$ <br> $TS_4^5$ | Yes <br> Untruthful |

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110057830 A1
- EP 1906204 B1

- US 20120041620 A
- EP 10906204 B1

**Non-patent literature cited in the description**

- **KRISHNA SAMPIGETHAYA ; RADHA POOVENDRAN ; LINDA BUSHNELL.** Assessment and Mitigation of Cyber Exploits in Future Aircraft Surveillance. *IEEEAC paper #1342,* 01 November 2009